# EUROPEAN PATENT SPECIFICATION

(11) **EP 0 599 634 B1**
(45) Date of publication and mention of the grant of the patent: **16.07.1997**
(21) Application number: 93309373.4
(22) Date of filing: 24.11.1993
(51) Int. Cl.: H02G 3/06

(54) **A device for coupling cable tray components**
Kupplungseinrichtung für Kabelrinneteilen
Dispositif de couplage pour composants de support de câble

(30) Priority: 24.11.1992 GB 9224545; 11.02.1993 GB 9302759; 24.09.1993 GB 9319779
(43) Date of publication of application: 01.06.1994
(73) Proprietor: RICH MULLER LTD, Birchwood, Warrington, Cheshire WA3 6PL (GB)
(72) Inventor: Hassall, Anthony George, Bowden, Cheshire WA14 3DZ (GB); Wilson, John, Eccleston, St. Helens WA10 4LS (GB)
(74) Representative: Coleiro, Raymond

(56) References cited:
- WO-A-92/04755
- DE-A- 3 817 475
- DE-U- 8 901 613
- FR-A- 2 044 101
- FR-A- 2 540 946

## Description

This invention concerns devices for coupling together cable trays or for coupling cable trays to other components of cable tray systems.

Cable tray systems comprise a number of components which may or may not be used in any particular installation, depending upon requirements, but the main components, which are always used comprise cable trays. A cable tray is a length of channel member having a base and side flanges. It serves to hold cables, service pipes and the like. It has apertures in the base thereof and sometimes the flanges have apertures. Cable trays may be connected end to end by connection pieces, similar to fishplates, or by overlapping the cable tray ends. Where connection pieces are used they are components of the system.

The system may also include what are known as accessories which serve mainly to couple cable trays which lie at an angle to one another, such accessories also having apertures and being adapted to overlap the relevant cable tray ends. Such accessories include T-junction and Y-junction connection pieces as well as cruciform connection pieces. Finally, it is usual for the system to include mountings or brackets on which the cable trays are supported, said mountings also having apertures.

One purpose of the apertures in the cable tray system components is to enable the components to be secured together by screws or bolts. However, these apertures also enable cables and pipes to be secured to the cable trays and the accessories of the system by use of flexible ties or the like.

A cable tray basically comprises a strip of sheet material, typically metal, which has its edges bent upwardly so that the strip takes up a shallow U-sectioned shape. To form supports for cables and pipes in factories and offices, such cable trays must be connected end to end to form long lengths of cable tray installation. The conventional method of coupling cable trays end to end takes a considerable amount of time because the couplings are usually made using connection pieces and nuts and bolts. In cases where the cable tray sides have plain ends, these may be joggled at one end to receive the adjacent end of another cable tray so that connection pieces are not required, although nuts and bolts are still used for the connection. Where the free edges of the sides or flanges of the tray are inwardly turned, it is usual to use connection pieces which overlap adjacent tray ends in place of the joggling referred to above.

It has long been recognised that the establishment of the connections either in end to end coupling of cable trays or coupling of cable trays to mountings and accessories is time consuming and laborious. Frequently during installation of cable trays systems the coupling task is not carried out properly, through tedium or carelessness, and the nuts and bolts are either not properly tightened, or are omitted.

Any means whereby a reduction in the time taken to make the respective couplings can be achieved represents a significant advance.
Proposals have already been made for fastening together overlapping or adjoining cable trays using various forms of spring clip. In this respect prior specification FR-A-2044101 discloses the use of small C-clips with elongated undulating limbs which are insertable through selected aligned apertures in trays and overlapping connection pieces for engagement, inside the channels formed by the trays, with respective portions of an elongate rod, which is provided for the purpose of retention of said clips. More recently, spring means of V-configuration have been proposed in specification WO 92/04755 for clipping together overlapped cable trays ends or fastening cable trays to connection pieces or other accessories. In this case the V-shaped clips are of spring steel rod and are bent to provide two arms of substantially equal length. A step is formed by bending of the metal where the arms connect and this step is inserted into a selected set of aligned apertures in the components. The arms are then stressed together so that their free ends, which are also formed with respective steps, are insertable into another aligned set of apertures, the arms then being allowed to spring apart, thereby holding the clip in place.

French patent FR 2540946 discloses a fastening element for the assembly of supporting devices. The element comprises a clamp formed by a bent band in one piece made of flexible material comprising a flat portion formed by the central portion of the band and two curved flexible branches. The branches are formed by sections bent back towards the inside extending as far as the lower face of the flat portion and are symmetrical in relation to the central axis of symmetry of the flat portion and, at some distance from the lower face of the flat portion, have projecting catch elements formed by bending and directed towards the centre of the flat portion. The projections are provided to hook behind the edge of a hole when the branches are pushed into elongated holes in the support element and elongated holes in the bracket. German utility model DE-U-8901613 discloses a bent metal strip with an offset tongue.

An object of the present invention is to provide alternative means of fastening together cable trays or of fastening cable trays to accessories or mountings which is equally quick and simple to accomplish, which produces a reliable connection, and which obviates the need for use of nuts and bolts.

The present invention provides a device for coupling cable tray components comprising a strip of metal bent to define a central web generally disposed in one plane and respective connector sections at each end of said web, the connector sections being disposed laterally to the same side of the plane of the web as each other, characterised in that only one of said connector sections has an upstanding proximal portion joined to the web and a distal portion which is joined to the proximal portion and is bent at an angle thereto so as to be directed back towards the plane of the web and so as to be capable of resiliently flexing towards the proximal portion, wherein the other of the connector sections consists of a tongue, disposed substantially in parallel with the central web, but laterally offset relative thereto by a step or joggle. Preferably the distal portion is shorter than the proximal portion.

In use the coupling of overlapped cable tray components is established by the respective connector sections being inserted through respective sets of aligned apertures in the overlapped components. The distal portion of each connector section configured as just specified is flexed towards its adjoining proximal portion upon insertion, but springs back to its rest position once the connector section is fully inserted so as to prevent removal thereof from the apertures.

In particularly preferred embodiments the bent over distal portion and tongue face away from each other, outwardly with respect to the central web.

The distal portion of the connector section will usually extend obliquely towards the plane of the web. This enables a more reliable connection to be established irrespective of the size of the aligned apertures through which the connector sections are to be inserted. In some cases, however, the distal portion may conveniently be bent over to lie substantially parallel to the respective proximal portion.

For the same reason of more reliably establishing a connection, which cannot readily be released, irrespective of the aperture size, the distal portion of the connector section may be provided with an inturned lip at its free end.

The proximal portions may stand perpendicular to the web, or they may project therefrom at an oblique angle.

By using such devices in accordance with the invention a cable tray may be coupled to another cable tray directly or using a connection piece wherein the respective cable tray ends are either aligned and bridged by at least one coupling piece or are overlapped.

A cable tray may also be coupled to a mounting or accessory in substantially identical manner by use of a coupling device as specified above.

According to a preferred embodiment, the invention also provides a cable tray assembly in which components are coupled by the inventive devices, the devices being clipped into coupling arrangement by insertion of their connector sections into selected aligned apertures of the components, the flexural return of the distal position or portion thereof to its unstressed position serving to hold the said connector sections in position through said apertures.

In the aforesaid system it may also be advantageous to provide one or more apertures in the webs of the coupling devices for alignment with apertures in the cable tray components and insertion therethrough of plastic grommets, for example. The latter may serve to reduce any degree of slackness in the connection, i.e. minimise relative movement between the coupled cable tray components. Furthermore, particularly if they are coloured, grommets usefully serve as flags or markers, to indicate to any inspector, at a glance, that the coupling devices are in position fastening the cable tray components together. In this respect, the apertures in the cable tray components themselves are generally of elongate form, and may be of larger dimension than the proposed apertures in the coupling devices so it may be only the latter which hold the grommets as a snug fit, although the grommets will also extend into or through the apertures in the cable tray components so as to be visible from the other side of the installation for purposes of inspection. Thus, the visible presence of a grommet can be an indication of the presence of a properly fitted coupling device. As an alternative to insertion of grommets through the web apertures they may be retained in a connector section of the cup.

The same apertures or additional apertures in the webs of the devices may also allow for insertion therethrough, and through aligned apertures in the cable tray components, of bolts, for securement by nuts. These are not for the purpose of connection of the components, which is already accomplished by the insertion or clipping in of the connector sections of the coupling device, but is to ensure a continuous earth connection between the adjoining cable trays by way of said bolts and the webs of said devices in cases where this is deemed necessary or desirable.

Practical embodiments of the invention will now be described, by way of example only, with reference to the accompanying drawings, in which:
Fig. 1 is a perspective view of a coupling device which is not completely in accordance with the invention but which shows certain preferred features.

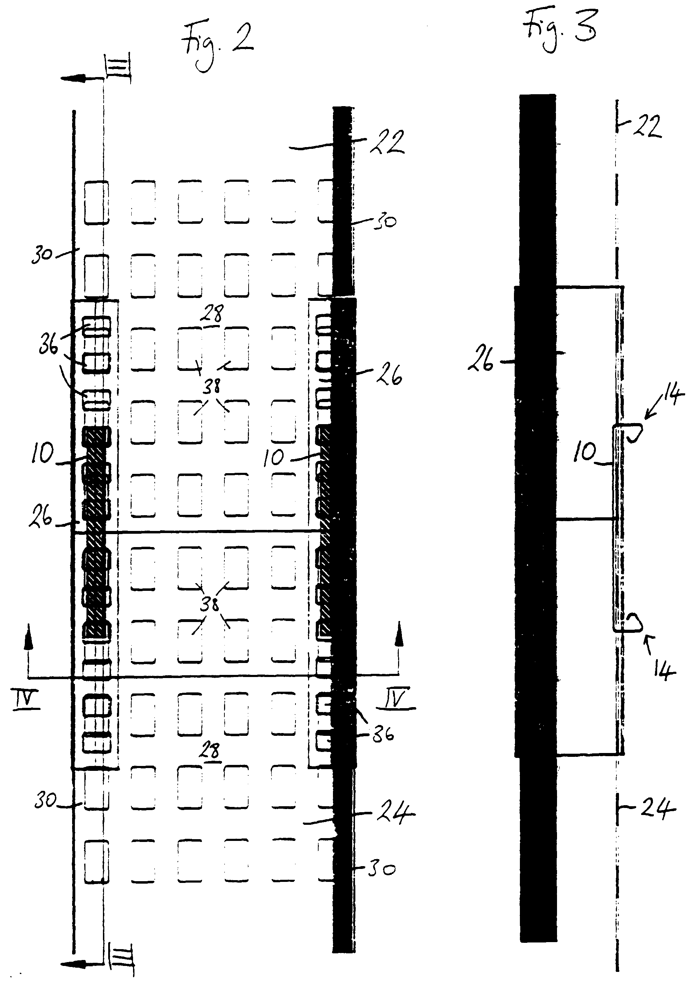

Fig. 2 is a partly sectioned plan view of a cable tray assembly, including two devices of the type shown in Fig. 1, along the line II-II shown in Fig. 4, and to a reduced scale compared to Fig. 1;
Fig. 3 is a longitudinal section through the assembly along line III-III of Fig. 2;
Fig. 4 is a transverse section through the assembly along the line IV-IV of Fig. 2;
Fig. 5 is a plan view of an embodiment of a coupling device of the invention, in position coupling two cable trays;
Fig. 6 is a side view corresponding to Fig. 5;
Fig. 7 is an underside view corresponding to Fig. 5; and
Figs. 8 and 9 are reduced scale sketches illustrating the manner of attachment of the embodiment of Fig. 5 for securing two overlying sections of cable tray.
Fig. 10 is a side view illustrating another embodiment of a coupling device according to the invention.

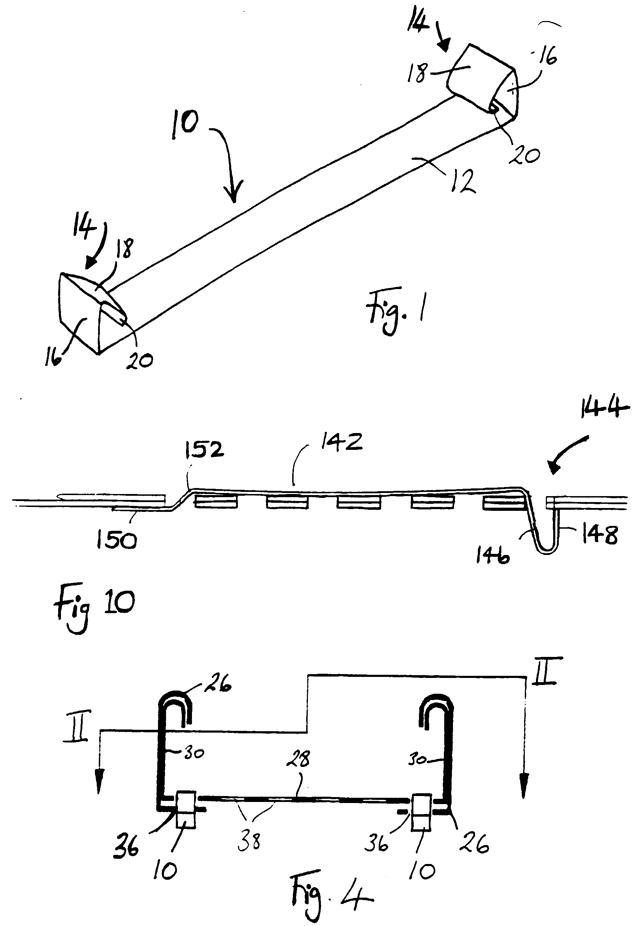

With reference, first of all to Fig. 1, the first illustrated coupling device 10 which is not completely in accordance with the invention but shows certain preferred features, comprises a strip of spring steel which has been bent to define a central web 12 and respective connector sections 14 at each end thereof. The connector sections 14 project laterally to the same side of the web 12. Contrary to the invention, which requires that one of the connector sections be a parallel, offset tongue, the figure shows a coupling device with two identical connecting sections, each of which has a proximal portion 16 standing substantially perpendicular to the web 12 and a distal portion 18 continuing from the proximal portion and bent at an acute angle thereto so as to extend back obliquely towards the web 12. The distal portions 18 are also shorter than the proximal portions 16. A further inturned lip 20 is provided at the end of each distal portion 18. A degree of resilient flexure is inherent along the region of the joint between each distal portion 18 and its respective proximal portion 16 so that the distal portions 18 can be pressed towards their proximal portions 16 by exertion of reasonable force thereon, but spring back upon release of such pressure.

Figs. 2 and 3 show the end regions of abutting cable trays 22, 24, which are joined to each other by a pair of connection pieces 26, one at each side, and a pair of coupling devices 10 of the configuration shown in Fig. 1. The cable trays 22, 24 are metal channel members each having a base 28 and side flanges 30 and in this case the upper edges of the flanges 30 are inwardly turned. The connection pieces 26 match the contour of the side flanges 30 and fit thereover, overlapping each of the abutting trays 22, 24 by an approximately equal extent. All of this is conventional.

The bases 28 of the respective cable trays 22, 24 are perforated by rows of apertures 38, and the connection pieces 26 are also formed with a series of apertures 36, which are readily positioned in alignment with the apertures 38 of the trays 22, 24. Again, this is conventional. It will be appreciated that the apertures 36, 38 in the trays and connection pieces may be of various different forms e.g. in terms of size and spacing.

However, instead of the connection pieces 26 being fastened to the trays 22, 24 by nuts and bolts through selected ones of the aligned apertures 36, 38, a single coupling device 10 is used at each side, the connector sections 14 thereof being clipped or snapped into respective aligned apertures 36, 38. In this respect, the connector sections 14 may simply be pressed home by manual force, with the distal portions 18 thereof flexing towards their proximal portions 16 upon insertion and then springing back when the relevant section 14 is fully inserted to complete the engagement of the section 14 in the apertures.

Refinements necessitating provision of apertures in the web 12 of the coupling devices 10 for insertion of coloured plastic grommets or for additional connection of bolts for purposes of ensuring earthing of the assembly, may be undertaken, as described previously.

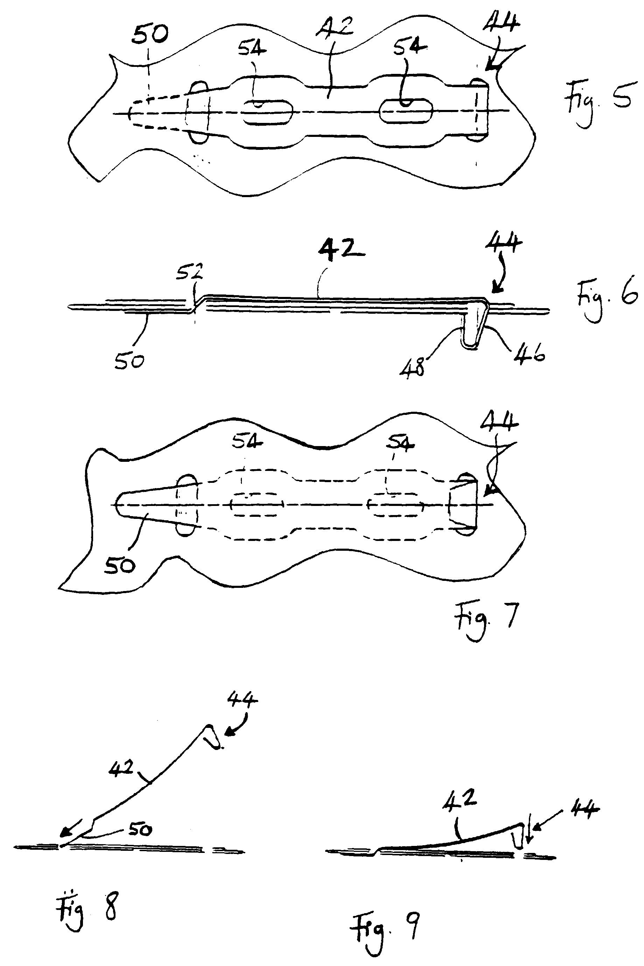

Turning now to Figs. 5 to 7, these show an embodiment of the coupling device of the invention, which may be preferred. The device is made from a strip of spring steel which is bent to define a central web 42 and respective connector sections at each end thereof. Whilst the web 42 is slightly bowed, it is generally disposed in one plane and has two connector sections each disposed to the same side of the plane of the web 42. The first connector section 44 is similar to the connector sections 14 shown in figure 1 in that it has an upstanding proximal portion 46 and a distal portion 48 bent back towards the place of the web 42. In this embodiment the proximal portion 46 extends upwardly at an oblique angle to the web 42, i.e. it is bent through an angle of more than 90°, and the distal portion 48, while being bent round to lie at an acute angle to the proximal portion 46, is positioned, at rest, approximately perpendicular to the web 42, as best seen in Fig. 6.

The second connector section consists of a tapering tongue 50, disposed substantially in parallel with the web 42, but laterally offset relative thereto by a step or joggle 52.

For connecting a pair of cable trays, or a connection piece to a cable tray, the tongue 50 is firstly inserted through a pair of aligned holes in the trays or the tray and the piece and the other connector section 44 is then snapped in to another aligned pair of holes in the vicinity, as clearly illustrated in Figs. 8 and 9, and as indicated by the arrows therein. Upon insertion of the section 44, the distal portion 48 flexes towards the proximal portion 46, and then springs back once it is through so as to secure the connector device in position and the trays or tray and connection piece to each other.

In this embodiment, two apertures 54 are provided in the web 42 of the device for insertion, if required, of bolts. The web 42 is enlarged width wise in the region of these apertures 54 so that its strength is not excessively impaired in these regions. Clearly, a different number of apertures could be incorporated in the web and the apertures could take various forms.

Turning now to Fig. 10 this illustrates another embodiment of the coupling device of the invention, which may be preferred. Again, the device is made from a strip of spring steel which is bent to define a central web 142 and respective connector sections 144 at each end thereof. The web 142 is very slightly bowed. Both connector sections 144 project laterally to the same side of the web. Generally as in the previous embodiment, one connector section comprises a tapering tongue 150 disposed substantially parallel to web 142 but laterally offset relative thereto by a step or joggle 152. The second connector section comprises an upstanding proximal portion 146 and a distal portion 148 bent back towards the plane of web 142 but in a direction away from the tongue 150. The proximal portion 146 extends at an oblique angle to the web 142 and the distal portion 148 extends at an acute angle to the proximal portion 146.

Other variations in the configuration of the coupling devices are also possible within the scope of the invention as defined in the claims.

## Claims

1. A device for coupling cable tray components comprising a strip of metal bent to define a central web (12, 42, 142) generally disposed in one plane and respective connector sections (14, 44, 50, 144, 150) at each end of said web, the connector sections (14, 44, 50, 144, 150) being disposed laterally to the same side of the plane of the web (12, 42, 142) as each other, characterised in that only one of said connector sections (14, 44, 144) has an upstanding proximal portion (16, 46, 146) joined to the web and a distal portion (18, 48, 148) which is joined to the proximal portion and is bent at an angle thereto so as to be directed back towards the plane of the web and so as to be capable of resiliently flexing towards the proximal portion, wherein the other of the connector sections (50, 150) consists of a tongue (50, 150), disposed substantially in parallel with the central web, but laterally offset relative thereto by a step or joggle (52, 152).

2. A device according to claim 1 wherein the distal portion (148) of the one connector section (144) is directed away from the tongue (150) of the other connector section.

3. A device according to any preceding claim wherein the distal portion (18) of the one connector section (14) extends obliquely towards the plane of the web (12).

4. A device according to any preceding claim wherein the distal portion (18) of the one connector section (14) is provided with an inturned lip (20) at its free end.

5. A device according to any preceding claim wherein the proximal portion (16) of the one connector section (14) stands approximately perpendicular to the central web (12).

6. A cable tray assembly in which components (22, 24) are coupled by devices according to any one of the preceding claims, the devices being clipped into coupling arrangement by insertion of their connector sections (14, 44, 50, 144, 150) into selected aligned apertures of the components (22, 24), the flexural return of the distal position (18, 48, 148) thereof to its unstressed position serving to hold the said connector sections (14, 44, 144) in position through said apertures.

7. An assembly according to claim 6 wherein apertures (54) are provided in the webs (42) of the coupling devices and grommets of plastics material are inserted through at least certain of said apertures and through aligned apertures in the cable tray components which they connect.

8. An assembly according to claim 6 or 7 wherein additional apertures (54) are provided in the webs (42) of the coupling devices and, when aligned with apertures in the cable tray components which they connect, metal bolts are secured therethrough so that the devices themselves serve as earth connections between the adjoined components.

## Patentansprüche

1. Kupplungsvorrichtung für Kabeltassenteile, umfassend einen Metallstreifen, der so gebogen ist, dass er einen zentralen Steg (12, 42, 142), der allgemein in einer Ebene angeordnet ist, und jeweilige Verbinderabschnitte (14, 44, 50, 144, 150) an jedem Ende des Stegs definiert, wobei die Verbinderabschnitte (14, 44, 50, 144, 150) seitlich zur gleichen Seite der Ebene des Stegs (12, 42, 142) wie zueinander angeordnet sind, dadurch gekennzeichnet, dass nur einer der Verbinderabschnitte (14, 44, 144) einen aufgestellten, mit dem Steg verbundenen, proximalen Abschnitt (16, 46, 146) und einen distalen Abschnitt (18, 48, 148) aufweist, der mit dem proximalen Abschnitt verbunden ist und in einem Winkel dazu gebogen ist, so dass er wieder zurück zur Ebene des Stegs gerichtet ist und um flexibel zum proximalen Abschnitt hin gebogen werden zu können, wobei der andere der Verbinderabschnitte (50, 150) aus einer Zunge (50, 150) besteht, die im wesentlichen parallel zum zentralen Steg positioniert, jedoch gegenüber diesem durch eine Stufe oder eine Kröpfung (52, 152) seitlich versetzt ist.

2. Vorrichtung nach Anspruch 1, worin der distale Abschnitt (148) des einen Verbinderabschnitts (144) weg von der Zunge (150) des anderen Verbinderabschnitts gerichtet ist.

3. Vorrichtung nach einem der vorhergehenden Ansprüche, worin sich der distale Abschnitt (18) des einen Verbinderabschnitts (14) schräg zur Ebene des Stegs (12) erstreckt.

4. Vorrichtung nach einem der vorhergehenden Ansprüche, worin der distale Abschnitt (18) des einen Verbinderabschnitts (14) an seinem freien Ende mit einer nach innen gekehrten Lippe (20) versehen ist.

5. Vorrichtung nach einem der vorhergehenden Ansprüche, worin der proximale Abschnitt (16) des einen Verbinderabschnitts (14) etwa normal zum zentralen Steg (12) steht.

6. Kabeltassenanordnung, in der Teile bzw. Komponenten (22, 24) durch Vorrichtungen nach einem der vorhergehenden Ansprüche gekuppelt sind, wobei die Vorrichtungen durch Einsetzen ihrer Verbinderabschnitte (14, 44, 50, 144, 150) in ausgewählte ausgerichtete Öffnungen der Komponenten (22, 24) in Kupplungseingriff geklemmt werden, wobei die Rückbiegebewegung des distalen Abschnitts (18, 48, 148) in seine spannungsfreie Position dazu dient, die Verbinderabschnitte (14, 44, 144) über die Öffnungen in Position zu halten.

7. Anordnung nach Anspruch 6, worin Öffnungen (54) in den Stegen (42) der Kupplungsvorrichtungen vorhanden sind und Durchgangstüllen aus Kunststoffmaterial durch zumindest bestimmte Öffnungen und durch ausgerichtete Öffnungen in den Kabeltassenteilen, die sie verbinden, hindurch eingesetzt sind.

8. Anordnung nach Anspruch 6 oder 7, worin zusätzliche Öffnungen (54) in den Stegen (42) der Kupplungsvorrichtungen vorhanden sind und - wenn sie mit Öffnungen in den Kabeltassenteilen, die sie verbinden, ausgerichtet sind - Metallbolzen durch sie hindurch befestigt sind, sodass die Vorrichtungen selbst als Erdungsverbindungen zwischen den aneinandergefügten Teilen dienen.

## Revendications

1. Dispositif de couplage pour composants de support de câble comprenant une bande de métal courbée pour définir une bande centrale (12, 42, 142) généralement disposée dans un plan et des sections de connecteur respectives (14, 44, 50, 144, 150) à chaque extrémité de ladite bande, lesdites sections de connecteur (14, 44, 50, 144, 150) étant disposées latéralement vers le même côté du plan de la bande (12, 42, 142) que l'une vers l'autre, caractérisé en ce que seulement une desdites sections de connecteur (14, 44, 144) présente une portion proximale érigée (16, 46, 146) reliée à la bande ainsi qu'une portion distale (18, 48, 148) qui est reliée à la portion proximale et qui est courbée suivant un angle à celle-ci de façon à être dirigée vers l'arrière vers le plan de la bande et de façon à pouvoir fléchir élastiquement vers la portion proximale, où l'autre des sections de connecteur (50, 150) est constituée d'une languette (50, 150) disposée sensiblement parallèlement à la bande centrale mais décalée latéralement relativement à celle-ci par un pas ou gradin (52, 152).

2. Dispositif selon la revendication 1, où la portion distale (148) de la section de connecteur précitée (144) est dirigée au loin de la languette (150) de l'autre section de connecteur.

3. Dispositif selon l'une des revendications précédentes, où la portion distale (18) de ladite section de connecteur précitée (14) s'étend en biais vers le plan de la bande (12).

4. Dispositif selon l'une des revendications précédentes, où la portion distale (18) de la section de connecteur précitée (14) présente une lèvre (20) tournée vers l'intérieur à son extrémité libre.

5. Dispositif selon l'une des revendications précédentes, où la portion proximale (16) de la section de connecteur précitée (14) s'étend approximativement perpendiculairement à la bande centrale (12).

6. Ensemble de support de câble où les composants (22, 24) sont couplés par des dispositifs selon l'une des revendications précédentes, les dispositifs étant attachés suivant un agencement de couplage en insérant leurs sections de connecteur (14, 44, 50, 144, 150) dans des ouvertures alignées choisies des composants (22, 24), le retour avec flexion de la portion distale (18, 48, 148) de ceux-ci à leur position non contrainte servant à retenir lesdites sections de connecteur (14, 44, 144) en position à travers lesdites ouvertures.

7. Ensemble selon la revendication 6, où des ouvertures (54) sont réalisées dans les bandes (42) des dispositifs de couplage, et des passe-fils en matière plastique sont insérés à travers au moins certaines desdites ouvertures et à travers des ouvertures alignées dans les composants de support de câble qu'ils relient.

8. Ensemble selon la revendication 6 ou 7, où des ouvertures additionnelles (54) sont prévues dans les bandes (42) des dispositifs d'accouplement et, lorsqu'ils sont alignés avec les ouvertures dans les composants de support de câble qu'ils relient, des boulons métalliques sont fixés à travers ceux-ci de telle sorte que les dispositifs eux-mêmes servent de connexions de masse entre les composants reliés.
